Europäisches Patentamt

European Patent Office

Office européen des brevets

(19)

(11) Veröffentlichungsnummer: **0 129 787 B1**

(12)

# EUROPÄISCHE PATENTSCHRIFT

(45) Veröffentlichungstag der Patentschrift: **02.05.91**

(21) Anmeldenummer: **84106812.5**

(22) Anmeldetag: **14.06.84**

(51) Int. Cl.5: **C08G 59/40**, C08G 18/58,
C08G 59/72, C08G 59/68,
C08G 18/18, C08L 75/04,
C08L 63/00

(54) Verfahren zur Herstellung von Formstoffen.

(30) Priorität: **27.06.83 DE 3323084**

(43) Veröffentlichungstag der Anmeldung:
**02.01.85 Patentblatt 85/01**

(45) Bekanntmachung des Hinweises auf die
Patenterteilung:
**02.05.91 Patentblatt 91/18**

(84) Benannte Vertragsstaaten:
**AT BE CH DE FR GB IT LI NL SE**

(56) Entgegenhaltungen:
**DE-A- 1 915 766       DE-A- 2 359 386
DE-A- 2 825 614       DE-A- 3 204 809
DE-B- 2 655 367       FR-A- 2 242 419
FR-A- 2 286 171       FR-A- 2 351 139**

**PATENT ABSTRACTS OF JAPAN, Band 6, Nr.
94 (C-105)[972], 2. Juni 1982; & JP - A - 57
23620 (HITACHI SEISAKUSKO K.K.)
06.02.1982**

(73) Patentinhaber: **Siemens Aktiengesellschaft
Wittelsbacherplatz 2
W-8000 München 2(DE)**

(72) Erfinder: **Markert, Helmut, Dr.
Lohengrinstrasse 17
W-8500 Nürnberg(DE)**
Erfinder: **Rogler, Wolfgang, Dr.
Geschwister-Scholl-Strasse 4
W-8520 Erlangen(DE)**
Erfinder: **Hauschildt, Klaus-Robert
Balthasar-Neumann-Strasse 83
W-8500 Nürnberg(DE)**
Erfinder: **Kretzschmar, Klaus, Dr.
Im Heuschlag 5
W-8520 Erlangen(DE)**

**Beschreibung**

Die Erfindung betrifft ein Verfahren zur Herstellung von Formstoffen für Isolierbauteile aus schnellhärtbaren Reaktionsharzen in Gegenwart eines Härtungskatalysators.

Für den wirtschaftlichen Einsatz von Reaktionsharzformstoffen zur Herstellung von Isolierbauteilen ist die Verfügbarkeit von schnellhärtbaren Reaktionsharzen von ausschlaggebender Bedeutung, weil dabei die Herstellungskosten über verkürzte Formbelegungszeiten gesenkt werden können. Bei den in der Elektrotechnik zur Herstellung von mechanisch-thermisch und elektrisch hochwertigen Reaktionsharzformstoffen überwiegend eingesetzten säureanhydridhärtbaren Epoxidharzen ist bekannt, daß bei der spritzgußanalogen Verarbeitung von hochreaktiv eingestellten Harzen die Formbelegungszeiten gegenüber dem konventionellen Gießverfahren erheblich reduziert werden können. Die niedrigviskosen, meist Füllstoffe enthaltenden Epoxidharzmassen werden dabei in Gießformen, die in der Regel eine wesentlich höhere Temperatur als die Harzmasse aufweisen, hineingedrückt und damit schneller und bei höherer Temperatur geliert als bei der konventionellen Arbeitsweise, bei der erst nach dem Verguß, meist stufenweise, zur Gelierung und Vernetzung der Epoxidharze aufgeheizt wird.

Von Nachteil bei der spritzgußanalogen Verarbeitung von säureanhydridhärtbaren Epoxidharzen sind die im Vergleich zum konventionellen Verguß abfallenden mechanischen Eigenschaften der spritzgegossenen Formkörper, beispielsweise die verringerte Biegefestigkeit. Dies ist einerseits aus der Fachliteratur bekannt und kann andererseits auch durch eigene Untersuchungen belegt werden (siehe Tabelle 1). Ein weiterer Nachteil der anhydridisch vernetzbaren Epoxidharze besteht darin, daß eine Erhöhung der Wärmeformbeständigkeit der Formstoffe auf Temperaturen größer 150 °C - ohne Einbußen bei den mechanischen Eigenschaften - auf erhebliche Schwierigkeiten stößt. Die zunehmend höhere thermische Belastung der Reaktionsharzformstoffe in der Elektrotechnik erfordert deshalb schnellhärtbare Reaktionsharze, aus denen sich Formstoffe mit hoher Wärmeformbeständigkeit bei gleichzeitig guten mechanischen Eigenschaften herstellen lassen.

Als hochwärmebeständige Reaktionsharzformstoffe sind Formstoffe bekannt (siehe DE-AS 11 15 922 und DE-OS 19 63 900), die bei der thermischen Härtung von Reaktionsharzmischungen aus Polyepoxiden und Polyisocyanaten, sogenannten EP/IC-Harzen, in Gegenwart von Härtungskatalysatoren entstehen. Zur Herstellung werden dabei EP/IC-Harze beschrieben (DE-AS 23 59 386), die ein Ansatzmolverhältnis der Epoxid- und Isocyanatgruppen (EP:IC) < 1 besitzen. Es wird dabei darauf hingewiesen, daß die besten thermischen Formstoffeigenschaften der gebildeten Oxazolidinon- und Isocyanuratringe enthaltenden Formstoffe (OX/ICR-Formstoffe) dann erhalten werden, wenn EP/IC-Harze mit einem Ansatzmolverhältnis EP:IC von 0,2 bis 0,7 im Temperaturbereich zwischen 70 und 130 °C vernetzt und bei Temperaturen bis 220 °C nachgehärtet werden. Die auf diese Weise hergestellten Formstoffe zeigen nun zwar eine ausgezeichnete Wärmeformbeständigkeit, sie besitzen aber nur mäßige mechanische Eigenschaften und eine ungenügende Temperaturwechselbeständigkeit. Die mechanischen Eigenschaften verschlechtern sich dabei mit steigendem Gehalt an Polyisocyanat im EP/IC-Harz.

Es ist deshalb verständlich, daß bereits auch vorgeschlagen wurde, die mechanischen Eigenschaften von OX/ICR-Formstoffen durch den Einbau flexibilisierender bzw. elastifizierender Komponenten zu verbessern. Als geeignete Polyepoxidkomponente für die EP/IC-Harze wurden dabei präpolymere Oxazolidinone mit terminalen Epoxidgruppen vorgeschlagen (DE-AS 24 40 953). Die Viskosität dieser Präpolymeren liegt jedoch sehr hoch, so daß sie lösungsmittelfrei nur schwer zugänglich sind. Ein weiterer Vorschlag besteht darin, in EP/IC-Harzen Polyglycidylester von dimerisierten Fettsäuren in Mischungen mit anderen Polyepoxiden einzusetzen (DE-AS 25 45 106). Diese Polyglycidylester sind zwar niedrigviskos, sie zeigen jedoch ein schlechtes Mischungsverhalten im EP/IC-Harz. Vorgeschlagen wurde ferner, den EP/IC-Harzen als elastifizierende Komponente Copolymere von Butadien, beispielsweise mit Acrylnitril, zuzusetzen (DE-AS 27 46 789). Die Copolymeren besitzen dabei funktionelle Gruppen, wie Hydroxyl- und Carboxylgruppen, wobei die Carboxylgruppen mit Polyepoxiden umgesetzt sein können. Aufgrund der hohen Viskosität sind diese Copolymeren, insbesondere bei füllstoffhaltigen EP/IC-Harzen, jedoch kaum einsetzbar; außerdem sind sie schwer verarbeitbar, da sie eine hohe Entmischungstendenz im EP/IC-Harz zeigen. Von Nachteil ist ferner, daß alle bisher bekannten EP/IC-Harze bei der spritzgußanalogen Verarbeitung Formstoffe mit schlechteren mechanischen Eigenschaften ergeben als dies beim konventionellen Verguß und der Härtung dieser Reaktionsharze der Fall ist (siehe Tabelle 2).

Aufgabe der Erfindung ist es, niedrigviskose, hochfüllbare, gut mischbare und schnellhärtbare lösungsmittelfreie Reaktionsharze anzugeben, die - im Vergleich zu bislang technisch eingesetzten und spritzgußanalog verarbeitbaren, säureanhydridhärtbaren Epoxidharzen - Formstoffe mit wesentlich erhöhter Wärmeformbeständigkeit bei gleichzeitig guten mechanischen Eigenschaften ergeben.

Dies wird erfindungsgemäß dadurch erreicht, daß Reaktionsharzmischungen aus Polyepoxiden und Polyisocyanaten (EP/IC-Harze) mit einem Ansatzmolverhältnis der Epoxid- und Isocyanatgruppen (EP:IC) von 1 bis 5 und einer Viskosität bis zu 7000 mPa.s bei 25 ° C mittels tert. Aminen oder Imidazolen als Katalysatoren bei Geliertemperaturen von > 130 bis 150 ° C unter einem Druck zwischen 1 und 10 bar vernetzt und bei Temperaturen von 150 bis 200 ° C nachgehärtet werden, wobei Oxazolidinon- und Isocyanuratringe enthaltende Reaktionsharzformstoffe (OX/ICR-Formstoffe) mit einem Molverhältnis der Oxazolidinon- und Isocyanuratringe (OX:ICR) > 1 gebildet werden und der Umsatz der Epoxid- und Isocyanatgruppen nach der Härtung über 90 % liegt.

Die nach dem erfindungsgemäßen Verfahren hergestellten OX/ICR-Formstoffe weisen - im Vergleich mit bekannten Formstoffen - verbesserte mechanische Eigenschaften auf. Die Verbesserung der mechanischen Eigenschaften läßt sich dabei dadurch erklären, daß in das Netzwerk ein höherer Gehalt an Oxazolidinon- und Polyoxazolidinonstrukturen eingebaut wird als bei EP/IC-Harzen mit einem Ansatzmolverhältnis EP:IC < 1. Isocyanuratstrukturen bewirken ein engmaschiges Netzwerk und eine Versteifung der Polymerkette, so daß sie in erster Linie die Glasumwandlungstemperatur der Formstoffe beeinflussen. Im Gegensatz dazu weiten die Oxazolidinonstrukturen das Netzwerk auf und führen zu einer größeren Beweglichkeit der Polymerkette. Die mechanisch-thermischen Eigenschaften von OX/ICR-Formstoffen werden deshalbin erster Linie durch das Molverhältnis der in das Netzwerk eingebauten Oxazolidinon- und Isocyanuratstrukturen bestimmt. Bei den erfindungsgemäß hergestellten Formstoffen werden die mechanischen Eigenschaften auch noch dadurch verbessert, daß der Gehalt der - durch Epoxidpolymerisation entstehenden - Polyetherstrukturen im Polymernetzwerk erhöht wird.

Eigene Untersuchungen haben ergeben, daß bei der Vernetzung von EP/IC-Harzen mit einem Ansatzmolverhältnis EP:IC von 0,2 bis 0,7 das Molverhältnis OX:ICR der im OX/ICR-Formstoff gebildeten OX- und ICR-Ringe deutlich unter 1 liegt; die in Tabelle 3 angeführten Versuchsergebnisse zeigen, daß das Molverhältnis OX:ICR meist im Bereich von 0,4 bis 0,6 liegt. Im Gegensatz dazu wird der Oxazolidinongehalt in den OX/ICR-Formstoffen bei der Vernetzung von EP/IC-Harzen mit einem Ansatzmolverhältnis EP:IC = 1 bis 5 wesentlich erhöht. Es zeigt sich weiter, daß das Molverhältnis OX:ICR nicht nur zugunsten der Oxazolidinonbildung erhöht wird, sondern darüber hinaus durch verschiedene Maßnahmen, die miteinander kombiniert werden, gezielt gesteuert werden kann. Es sind dies das Ansatzmolverhältnis EP:IC, das im Bereich zwischen 1 und 5 liegt, und die Vernetzungstemperatur sowie gegebenenfalls die Art und die Konzentration des Reaktionsbeschleunigers, d.h. des Härtungskatalysators. Die Werte in Tabelle 4 zeigen den Einfluß auf das Molverhältnis OX:ICR bei einer Kombination der genannten Maßnahmen.

Es war nicht vorhersehbar, daß sich die mechanischen Eigenschaften der nach dem erfindungsgemäßen Verfahren hergestellten OX/ICR-Formstoffe - beim Übergang von der konventionellen Gieß- und Härtungstechnik zur spritzgußanalogen Herstellung der Formstoffe - nicht verschlechtern, sondern daß überraschenderweise sogar eine Verbesserung erreicht werden kann. Der Vergleich der bei der Herstellung von Normstab-Formstoffproben gewonnenen Werte in Tabelle 5 zeigt, daß die aus EP/IC-Harzen hergestellten OX/ICR-Formstoffe beim Übergang von der konventionellen Gieß- und Härtungstechnik zur spritzgußanalogen Verarbeitung mit Schnellgelierung der Harze deutlich verbesserte mechanische Eigenschaftswerte besitzen. Die Formbelegungszeiten liegen bei Geliertemperaturen von 130 bis 150 ° C zwischen 5 und 15 Minuten. Die Werte für die Wärmeformbeständigkeit gehen zwar beim Übergang zur spritzgußanalogen Verarbeitung und zu hohen Geliertemperaturen geringfügig zurück, doch besitzen die OX/ICR-Formstoffe mit Glasumwandlungstemperaturen > 180 ° C eine ausgezeichnete Wärmeformbeständigkeit. Ein Vergleich der mechanisch-thermischen Eigenschaftswerte der OX/ICR-Formstoffe mit - ebenfalls spritzgußanalog hergestellten - säureanhydridgehärteten Epoxidharzformstoffen (Tabelle 6) zeigt den technischen Fortschritt der OX/ICR-Formstoffe sehr deutlich. Die Ergebnisse lassen aber auch erkennen, daß bei einem Ansatzmolverhältnis EP:IC > 5 keine mechanisch-thermischen Eigenschaften mehr erwartet werden können, die denjenigen bei säureanhydridgehärteten Epoxidharzformstoffen überlegen sind.

Aus der DE-OS 28 25 614 ist ein Verfahren zur Herstellung von vernetzten Polymeren durch Umsetzung von flüssigen, mindestens zwei Epoxidgruppen im Molekül enthaltenden Epoxidverbindungen und Polyisocyanaten, und gegebenenfalls Polyhydroxylverbindungen, in Gegenwart von Härtungskatalysatoren bei Temperaturen zwischen Raumtemperatur und 250 ° C bekannt. Dabei kann bei diesem Verfahren - bei der Umsetzung einer Epoxidverbindung mit einem Polyisocyanat - das Mengenverhältnis so gewählt werden, daß im Ausgangsreaktionsgemisch auf eine Epoxidgrupe 0,1 bis 2 Isocyanatgruppen (vorzugsweise 0,3 bis 1,2 Isocyanatgruppen) entfallen. Bei diesem Verfahren werden aber ausschließlich saure Katalysatoren eingesetzt, es ist nämlich zwingend die Verwendung einer Komplexverbindung von $BF_3$ mit einem Ether, einer Phosphoniumverbindung oder mit Wasser, gegebenenfalls zusammen mit einer im Reaktionsgemisch löslichen Sn-, Zn- oder Fe-Verbindung, als Härtungskatalysator vorgeschrieben. Im Gegensatz dazu werden beim erfindungsgemäßen Verfahren ausschließlich basische Katalysatoren eingesetzt. In der DE-OS 28 25 614 findet sich außerdem kein Hinweis auf die beim erfindungsgemäßen Verfahren wesentliche Kombination von EP:IC-Verhältnis (im Reaktionsharz), Anwendung von Druck und Vernetzungstemperatur, und insbesondere auch kein Hinweis auf das bei den hergestellten Formstoffen wesentliche OX:ICR-Verhältnis.

Die vorstehenden Ausführungen gelten auch in bezug auf die DE-OS 25 43 386. Aus dieser Druckschrift ist eine wärmehärtende Harzzusammensetzung bekannt, die im wesentlichen folgende Bestandteile umfaßt:

a) Ein Isocyanat-Endgruppen enthaltendes Kondensationsprodukt, das durch Umsetzung einer Polycarbonsäureverbindung mit wenigstens einem Säureanhydridring mit einem stöchiometrischen Überschuß einer polyfunktionellen Isocyanatverbindung erhalten wird, oder das Kondensationsprodukt, das nicht umgesetzte Isocyanatverbindung enthält,

b) eine polyfunktionelle Epoxyverbindung,

c) einen Katalysator, der hauptsächlich zur Bildung von Isocyanurat- und Oxazolidinonringen führt, sowie gegebenenfalls

d) Additive, wie Färbemittel, Füllstoffe u.s.w. Dabei kann das Isocyanat-Endgruppen enthaltende Kondensationsprodukt bzw. das nicht umgesetzte Isocyanatverbindung enthaltende Kondensationsprodukt in einem Äquivalenzverhältnis der Isocyanatgruppen zu der polyfunktionellen Epoxyverbindung von 0,2:1 bis 4:1 vorliegen.

Die in den aus der DE-OS 25 43 386 bekannten Harzzusammensetzungen vorliegenden Isocyanatverbindungen sind nicht nur teuer und schwer herstellbar, sie sind technisch auch kaum einzusetzen, weil sie von der Viskosität her unbrauchbar sind; es liegen nämlich hochviskose bis feste Produkte vor. Die bekannten Harzzusammensetzungen scheiden deshalb auch für den praktischen Einsatz als Gieß- und Imprägnierharze aus. Ein weiterer Nachteil dieser Harze ist die relativ hohe Geliertemperatur. Im Gegensatz dazu weisen die beim erfindungsgemäßen Verfahren eingesetzten Reaktionsharzmischungen eine niedrige Viskosität auf und eignen sich deshalb in hervorragender Weise als Gieß- und Imprägnierharze, und zwar ohne Verwendung eines Lösungsmittels.

Aus der DE-AS 21 30 156 ist ein oxazolidinon-modifiziertes Epoxy-Novolakharz bekannt, das durch Umsetzung von (a) einem Epoxy-Novolakharz und (b) einem organischen Diisocyanat oder Diisothiocyanat, gegebenenfalls in Gegenwart eines einwertigen Alkohols, oder einem Carbamat aus einem organischen Diisocyanat und einem einwertigen Alkohol in Gegenwart von Katalysatoren erhalten wird, wobei das Verhältnis von NCO- oder NCS-Gruppen zu Epoxy-Gruppen im Bereich von 0,1:1 bis 0,5:1 gehalten wird. Hierbei handelt es sich aber nicht um die Herstellung von Formstoffen, sondern um die Herstellungvon Harzen, d.h. löslichen Verbindungen. Diese Harze sind modifizierte Epoxidverbindungen, die dann - in bekannter Weise - gehärtet werden, d.h. es erfolgt eine reine Epoxidharz-Härtung, aber keine Umsetzung mit Isocyanat.

Die Bestimmung der elektrischen Eigenschaften der nach dem erfindungsgemäßen Verfahren hergestellten OX/ICR-Formstoffe zeigt, daß diese Formstoffe auch sehr gute elektrische Eigenschaften besitzen. Hinzu kommt, daß die Prüfung des Brennverhaltens von quarzmehlgefüllten OX/ICR-Formstoffen nach VDE 0304 Teil 3 die Einstufung IIa, d.h. wieder verlöschend, ergibt (Tabelle 7). Eine derartige Einstufung ist bei quarzmehlgefüllten säureanhydridgehärteten Epoxidharzformstoffen nur unter zusätzlicher Verwendung von Aluminiumoxidtrihydrat als Füllstoff möglich, wobei dann jedoch die mechanischen Eigenschaften abfallen. Die bei quarzmehlgefüllten OX/ICR-Formstoffen gefundenen Werte für die Wasseraufnahme (Tabelle 8) zeigen, daß die aus den schnellhärtbaren EP/IC-Harzen mit einem Ansatzmolverhältnis EP:IC ≧ 1 hergestellten Formstoffe solchen Formstoffen überlegen sind, die mit einem Ansatzmolverhältnis EP:IC < 1 hergestellt werden. Für die mit einem Ansatzmolverhältnis EP:IC ≧ 1 hergestellten OX/ICR-Formstoffe ergibt dies beispielsweise ein besseres Verhalten bei der Klimaalterung.

Von besonderer Bedeutung für den technischen Einsatz der schnellhärtbaren EP/IC-Harze ist, daß die bei den Normstab-Formstoffproben erzielten Ergebnisse in hervorragender Weise auf in der Elektrotechnik übliche Fertigungsverfahren übertragen werden können. Die in Tabelle 9 zusammengefaßten Versuchsergebnisse zeigen dies am Beispiel der Herstellung von kriechstromfesten 6 kV-Stützisolatoren. Der Vergleich der Umbruchwerte für die Stützisolatoren, bestehend aus OX/ICR-Formstoff bzw. aus säureanhydridgehärtetem EP-Harzformstoff, ergibt, daß die OX/ICR-Stützisolatoren erheblich verbesserte Umbruchwerte besitzen, die auch nach 4wöchiger Temperung bei 160° C und Prüftemperaturen bis 155° C nur geringfügig niedriger als die Ausgangswerte bei 100° C liegen.

Beim erfindungsgemäßen Verfahren wird bei der Gelierung ein Druck zwischen 1 und 10 bar angewendet.

Für die beim erfindungsgemäßen Verfahren eingesetzten Polyepoxide sind relativ niedrigviskose aliphatische, cycloaliphatische oder aromatische Epoxide sowie deren Mischungen besonders gut geeignet. Bevorzugt werden Bisphenol-A-diglycidylether, Bisphenol-F-diglycidylether, 3,4-Epoxycyclohexylmethyl-3',4'-epoxycyclohexancarboxylat, Polyglycidylether von Phenol/Formaldehyd- bzw. Kresol/Formaldehyd-No-

4

volak, Diglycidylester von Phthal-, Isophthal- oder Terephthalsäure sowie Mischungen aus diesen Epoxidharzen eingesetzt. Weitere verwendbare Polyepoxide sind beispielsweise hydrierte Bisphenol-A- bzw. Bisphenol-F-diglycidylether, Hydantoinepoxidharze, Triglycidylisocyanurat, Triglycidyl-p-aminophenol, Tetraglycidyldiaminodiphenylmethan, Tetraglycidyldiaminodiphenylether, Tetrakis(4-glycidoxyphenyl)-ethan, Urazolepoxide und Epoxide, die im "Handbook of Epoxy Resins" von Henry Lee und Kris Neville, McGraw-Hill Book Company, 1967, und in der Monographie von Henry Lee "Epoxy Resins", American Chemical Society, 1970, beschrieben sind.

Als Polyisocyanate sind beim erfindungsgemäßen Verfahren relativ niedrigviskose aliphatische, cycloaliphatische oder aromatische Isocyanate sowie deren Mischungen besonders gut geeignet. Bevorzugt werden Isomerengemische aus 4,4'- und 2,4'-Diphenylmethandiisocyanat, polyolmodifizierte Polyisocyanate und Gemische von flüssigen Polyisocyanaten mit höhermolekularen Polyisocyanaten oder Carbodiimid-Polyisocyanaten eingesetzt. Weitere verwendbare Polyisocyanate sind beispielsweise Hexan-1,6-diisocyanat, Cyclohexan-1,3-diisocyanat und Isomere, 4,4'-Dicyclohexylmethandiisocyanat, 3-Isocyanatomethyl-3,5,5-trimethylcyclohexylisocyanat, 1,3-Dimethylbenzol-W,W'-diisocyanat und Isomere, 1-Methylbenzol-2,4-diiso-cyanat und Isomere, Naphthalin-1,4-diisocyanat, Diphenylether-4,4'-diisocyanat und Isomere, Diphenylsulfon-4,4'-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen endständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Die EP/IC-Harze können auch Komponenten enthalten, die im allgemeinen an den chemischen Reaktionen, die zu den OX/ICR-Formstoffen führen, nicht beteiligt sind. Als derartige Füllstoffe eignen sich mineralische und faserförmige Füllstoffe, wie Quarzmehl, Quarzgut, Aluminiumoxid, Glaspulver, Glimmer, Kaolin, Dolomit, Graphit und Ruß, sowie Kohlefasern, Glasfasern und Textilfasern. Farbstoffe, Stabilisatoren und Haftvermittler sowie andere Additive üblicher Art können den EP/IC-Harzen ebenfalls zugesetzt werden.

Beim erfindungsgemäßen Verfahren werden als Härtungskatalysatoren, die bei der Vernetzung die OX- und ICR-Ringbildung fördern, tert. Amine und Imidazole, eingesetzt. Als tert. Amine eignen sich beispielsweise Tetramethylethylendiamin, Dimethyloctylamin, Dimethylaminoethanol, Dimethylbenzylamin, 2,4,6-Tris-(dimethylaminomethyl)-phenol, N,N'-Tetramethyldiaminodiphenylmethan, N,N'-Dimethylpiperazin, N-Methylmorpholin, N-Methylpiperidin, N-Ethylpyrrolidin, 1,4-Diazabicyclo(2,2,2)-octan und Chinoline. Geeignete Imidazole sind beispielsweise 1-Methylimidazol, 2-Methylimidazol, 1,2-Dimethylimidazol, 1,2,4,5-Tetramethylimidazol, 1-Benzyl-2-phenylimidazol, 2-Undecylimidazol, 2-Heptadecylimidazol, 2-Ethyl-4-methylimidazol, 1-Cyanoethyl-2-ethyl-4-methylimidazol, 1-Cyanoethyl-2-phenylimidazol und 1-(4,6-Diamino-s-triazinyl-2-ethyl)-2-phenylimidazol.

Als Härtungskatalysatoren für die EP/IC-Harze eignen sich ferner Oniumsalze von tert. Aminen und Imidazolen, d.h. Oniumsalze mit N als Zentralatom. Beispiele für verwendbare Oniumsalze sind: Tetraeth-ylammoniumchlorid, Tetraethylammoniumbromid, Octyltrimethylammoniumbromid, Benzyltrimethylammoni-umchlorid, N-Ethylmorpholiniumbromid, 2-Ethyl-4-methylimidazoliumbromid, N-Ethylmorpholiniumtetraphenylborat, 1,2-Dimethylimidazoliumtetraphenylborat und Tetrabutylammoniumtetraphenylborat.

Die genannten Härtungskatalysatoren reagieren allerdings schon bei niederen Temperaturen und führen so zu relativ kurzen Topfzeiten, was die Verarbeitung der EP/IC-Harze erschweren kann. Bevorzugt werden beim erfindungsgemäßen Verfahren deshalb latente Härtungskatalysatoren eingesetzt, die bei niederen Temperaturen eine ausreichende Gebrauchsdauer gewährleisten. Als derartige Katalysatoren, die auch als latente Reaktionsbeschleuniger bezeichnet werden, eignen sich insbesondere Additionskomplexe von Bortrihalogeniden mit tert. Aminen und Imidazolen, beispielsweise die in der DE-PS 26 55 367 beschriebenen Additionskomplexe von Bortrichlorid und tert. Aminen der allgemeinen Formel $BCl_3 \cdot NR^1R^2R^3$, in der $R^1$, $R^2$ und $R^3$ gleiche oder verschiedene aliphatische, aromatische, heterocyclische oder arylaliphatische Reste sind, die paarweise auch Bestandteil von heterocyclischen Ringen sein können. Geeignet sind auch die analogen Komplexe des Bortrifluorids der Formel $BF_3 \cdot NR^1R^2R^3$, wobei $R^1$, $R^2$ und $R^3$ die vorstehend angegebene Bedeutung haben. Spezielle Beispiele für geeignete tert. Amine der $BF_3$- und $BCl_3$-Komplexe sind Octyldimethylamin und Benzyldimethylamin. Auch Morpholinverbindungen und Imidazole, insbesondere N-Methylmorpholin, N-Ethylmorpholin, 1,2-Dimethylimidazol und 1-Benzyl-2-phenylimidazol, sind zur Bildung von $BCl_3$- bzw. $BF_3$-Komplexen geeignet.

Eine Verlängerung der Gebrauchsdauer der beim erfindungsgemäßen Verfahren eingesetzten Harze kann auch dann erreicht werden, wenn als latente Härtungskatalysatoren tert. Amine oder Imidazole verwendet werden, die durch Zusatz von Elektronenakzeptoren desaktiviert sind. Geeignete Elektronenakzeptoren sind beispielsweise: 7,7,8,8-Tetracyanochinodimethan, 2,3-Dichlor-5,6-dicyanobenzochinon, 2,3,5,6-Tetrachlorbenzochinon und 1,2-Dinitrobenzol sowie Isomere davon.

Der Gehalt des Härtungskatalysators in den EP/IC-Harzen beträgt vorteilhaft 0,01 bis 5 Gew.-%, vorzugsweise 0,25 bis 2,5 Gew.-%, bezogen auf die Masse der Harzmatrix. Durch die Art und durch die Konzentration des Härtungskatalysators kann dabei die Härtungstemperatur und die Härtungsdauer beeinflußt werden.

Anhand von Ausführungsbeispielen soll die Erfindung noch näher erläutert werden. Die Zusammensetzung der in den nachfolgenden Beispielen eingesetzten EP/IC-Harze kann dabei den Tabellen 10 und 11 entnommen werden.

Beispiele 1 bis 5

Verwendet wurden die EP/IC-Harze A, B, C, D und E. Die einzelnen Komponenten (BAGE bzw. HHGE oder NOEP, MDI und QM I) wurden nacheinander in einen auf 80 °C vorgewärmten Mischbehälter eingerührt und 1 Stunde bei 80 °C unter Rühren und vermindertem Druck (< 1 mbar) entgast. Anschließend wurden die EP/IC-Harze auf 60 °C abgekühlt, der Härtungskatalysator zugesetzt und die EP/IC-Harze nochmals 1 Stunde bei 60 °C unter Rühren und vermindertem Druck entgast (bei den Harzen D und E betrug die Entgasungszeit lediglich 30 Minuten). Danach wurden die EP/IC-Harze unter Druck (3 bar) in auf 145 °C vorgeheizte Normstabformen gegossen; die Formbelegungszeit betrug bei den Harzen A, B und C jeweils 10 Minuten und bei den Harzen D und E jeweils 7 Minuten. Die entformten Normstäbe wurden dann 16 Stunden bei 200 °C (Harze A und E) bzw. 16 Stunden bei 180 °C (Harze B, C und D) gehärtet. An den so hergestellten OX/ICR-Formstoffen wurden die Biegefestigkeit (BF) nach DIN 53 452, die Schlagzähigkeit (SZ) nach DIN 53 453 und die Wärmeformbeständigkeit nach Martens ($T_M$) nach DIN 53 458 gemessen. Die gefundenen Werte sind in Tabelle 6 aufgeführt.

Beispiele 6 bis 8 (Vergleichsversuche)

Verwendet wurden die EP/IC-Harze A, B und C; die Aufbereitung der Harze erfolgte analog den Beispielen 1 bis 5. Die EP/IC-Harze wurden in konventioneller Gießtechnik (KGT) in auf 100 °C vorgeheizte Normstabformen gegossen. Die Vernetzung (Härtung) der Harze erfolgte 1 Stunde bei 100 °C und danach 3 Stunden bei 130 °C. Anschließend wurden die Normstäbe entformt und 16 Stunden bei 200 °C gehärtet. Die ermittelten Werte sind - neben den entsprechenden Werten für die Niederdruckschnellgießtechnik (NSG) - in Tabelle 5 enthalten.

Beispiele 9 bis 11 (Vergleichsversuche)

Verwendet wurden die EP/SA-Harze I, II und III, d.h. Harze auf der Basis Polyepoxid/Dicarbonsäureanhydrid (siehe Tabelle 12). Der in den EP/SA-Harzen enthaltene Füllstoff (QM I) wurde 16 Stunden bei 120 °C vorgetrocknet, dann wurden die Harzkomponenten in einen auf 70 °C vorgewärmten Mischbehälter eingerührt, homogenisiert und der Härtungskatalysator zugesetzt. Danach wurden die EP/SA-Harze 15 bis 20 Minuten bei 70 °C unter Rühren und vermindertem Druck (<5 mbar) entgast und unter Druck (3 bar) in auf 150 °C vorgeheizte Gießformen gegossen; die Formbelegungszeit betrug für die EP/SA-Harze I und III 10 Minuten und für das EP/SA-Harz II 15 Minuten. Die entformten Normstäbe wurden 16 Stunden bei 160 °C (Harze I und II) bzw. 16 Stunden bei 180 °C (Harz III) gehärtet. Die gefundenen Werte sind in Tabelle 6 aufgeführt.

Beispiele 14 und 15

Verwendet wurden die EP/IC-Harze H und I. Die Trocknung und Entgasung der Harze erfolgte analog den Beispielen 1 bis 5. Zur Zugabe des Härtungskatalysators wurden die EP/IC-Harze auf 40 °C abgekühlt, der Katalysator zugesetzt und anschließend die Harze nochmals 20 Minuten bei 40 °C unter Rühren und vermindertem Druck (< 1 mbar) entgast. Danach wurden die EP/IC-Harze unter Druck (3 bar) in auf 140 °C (Harz H) bzw. 150 °C (Harz I) vorgeheizte Formen gegossen; die Formbelegungszeit betrug 15 Minuten. Die entformten Normstäbe wurden dann 16 Stunden bei 180 °C gehärtet. Die ermittelten Werte sind in Tabelle 6 aufgeführt.

Beispiel 16

Das EP/IC-Harz D wurde zur Herstellung von 6 kV-Stützisolatoren verwendet. Das Harz wurde analog den Beispielen 1 bis 5 aufbereitet. Die anschließende Verarbeitung der Gießharzmasse zur Herstellung der 6 kV-Stützisolatoren erfolgte unter Verwendung einer elektrisch beheizten Stahlgießform (Gießformtemperatur: 150° C; Verarbeitungsdruck: 3 bar; Formschließzeit: 10 Minuten). Nach der Entformung wurden die 6 kV-Stützisolatoren 16 Stunden bei 180° C gehärtet. Die bei Prüftemperaturen von 100° C und 155° C ermittelten Umbruchwerte für die Stützisolatoren im Ausgangszustand und nach thermischer Belastung bei 160° C und 200° C sind in Tabelle 9 angeführt.

Beispiel 17 (Vergleichsversuch)

Zur Herstellung von 6 kV-Stützisolatoren wurde das EP/SA-Harz II verwendet. Die Aufbereitung des Harzes erfolgte analog den Beispielen 9 bis 11. Die Herstellung der Stützisolatoren wurde analog dem Beispiel 16 durchgeführt, wobei jedoch die Formschließzeit auf 15 Minuten verlängert und die Nachhärtungstemperatur auf 160° C gesenkt wurde. Die ermittelten Umbruchwerte sind in Tabelle 9 angeführt.

Tabelle 1 — Formstoffeigenschaften von säureanhydridgehärteten Epoxidharzen in Abhängigkeit von den Normstab-Herstellungsbedingungen

| Epoxidharz-zusammensetzung (Kurzbezeichnung[1]) | | | Normstab-Herstellungsbedingungen[2] | Formstoffeigenschaften[3] | | |
|---|---|---|---|---|---|---|
| | | | | BF $N/mm^2$ | SZ $Nmm/mm^2$ | $T_M$ °C |
| BAGE | 100 | MT[4] | KGT: 1 h 100°C, | | | |
| HHPSA | 80 | MT | 3 h 130°C, 16 h 180°C | 124 | 13 | 115 |
| DMBA | 0,5 | MT | NSG (3 bar):10 min 150°C, | | | |
| QM I | 360 | MT | 16 h 180°C | 116 | 11 | 117 |
| HYEP | 100 | MT | KGT: 1 h 100°C, | | | |
| MTHPSA | 110 | MT | 3 h 130°C, 16 h 180°C | 133 | 12 | 127 |
| 1MI | 0,5 | MT | NSG (3 bar):10 min 150°C, | | | |
| QM I | 380 | MT | 16 h 180°C | 121 | 10 | 133 |

[1] Chemische Bezeichnung siehe Tabelle 10

[2] KGT: Konventionelle Gießtechnik
NSG: Niederdruckschnellgießtechnik

[3] BF = Biegefestigkeit
SZ = Schlagzähigkeit
$T_M$ = Wärmeformbeständigkeit nach Martens

[4] MT = Masseteile

EP 0 129 787 B1

Tabelle 2  Einfluß der Normstab-Herstellungsbedingungen auf die Formstoffeigenschaften von vernetzten EP/IC-Harzen (Ansatzmolverhältnis EP:IC < 1)

| EP/IC-Harz | | | Formstoffeigenschaften | | |
|---|---|---|---|---|---|
| Komponenten[1] Molverhältnis EP:IC | | Normstab-Herstellungsbedingungen[2] | BF $N/mm^2$ | SZ $Nmm/mm^2$ | $T_M$ °C |
| BAGE; MDI QM I (66 %) | 0,5 | KGT: 1 h 130°C, 3 h 130°C, 16 h 200°C | 105 | 6 | 235 |
| $BCl_3 \cdot DMBA$ (1,5 %)[3] | 0,5 | NSG (3 bar): 10 min 150°C, 16 h 200°C | 76 | 4 | 209 |
| NOEP, PPGE[4]; MDI QM II (66 %) | 0,37 | KGT: 1 h 110°C, 4 h 140°C, 16 h 200°C | 115 | 12 | 225 |
| $BCl_2 \cdot DMBA$ (1,5 %)[3] | 0,37 | NSG (2 bar): 8 min 140°C, 16 h 200°C | 96 | 8,3 | 216 |

[1] Chemische Bezeichnung siehe Tabelle 10

[2] KGT: Konventionelle Gießtechnik, NSG: Niederdruckschnellgießtechnik

[3] Katalysatorkonzentration bezogen auf Harzmatrix

[4] Molverhältnis NOEP:PPGE = 1,0

EP 0 129 787 B1

Tabelle 3  Bildung von OX- und ICR-Ringen bei der Vernetzung von EP/IC-Harzen
(Ansatzmolverhältnis EP:IC = 0,25 bis 0,5)

| EP/IC-Harz | | Härtungskatalysator[1] in %[3] | | | Molverhältnis OX:ICR | Vernetzungs-bedingungen |
|---|---|---|---|---|---|---|
| Kompo-nenten[1] | Molverhältnis EP:IC | $BCl_3 \cdot$DMBA | 1CE2PI | T-Base | | |
| BAGE; MDI | 0,50 | 1,0 | – | – | 0,51 | 3 h 130°C und 16 h 200°C |
|  | 0,50 | 2,0 | – | – | 0,60 | 3 h 130°C und 16 h 200°C |
| NOEP, PPGE[2]; MDI | 0,37 | 1,5 | – | – | 0,46 | 3 h 110°C und 4 h 140°C und 16 h 200°C |
|  | 0,37 | – | 1,0 | – | 0,54 | 3 h 110°C und 4 h 140°C und 16 h 200°C |
| BAGE; MDI | 0,25 | 2,0 | – | – | 0,46 | 5 h 130°C und 16 h 200°C |
|  | 0,25 | – | – | 2,5 | 0,45 | 5 h 130°C und 16 h 200°C |

[1] Chemische Bezeichnung siehe Tabelle 10

[2] Molverhältnis NOEP:PPGE = 1,0

[3] Katalysatorkonzentration bezogen auf Harzmatrix

EP 0 129 787 B1

Tabelle 4  Bildung von OX- und ICR-Ringen bei der Vernetzung von EP/IC-Harzen
(Ansatzmolverhältnis EP:IC = 1,0 bis 3,0)

| Molverhältnis BAGE[1]:MDI[1] | Härtungs-katalysator[1] | Molverhältnis OX:ICR | Vernetzungsbedingungen |
|---|---|---|---|
| 1,0 | 2,0 % $BCl_3$·DMOA | 1,15 | 1 h 100°C, 3 h 130°C, 16 h 200°C |
| 1,0 | 1,5 % $BCl_3$·DMBA | 1,10 | 1 h 100°C, 3 h 130°C, 16 h 200°C |
| 1,0 | 1,0 % $BF_3$·1B2PI | 1,46 | 10 K/min bis 200°C, 16 h 200°C |
| 1,0 | 1,0 % 1CE2PI | 1,90 | 1 h 100°C, 4 h 140°C, 16 h 200°C |
| 1,0 | 1,0 % 1B2PI | 4,10 | 10 K/min bis 200°C, 16 h 180°C |
| 2,0 | 2,0 % T-Base | 2,50 | 4 h 130°C, 16 h 200°C |
| 2,0 | 2,0 % $BF_3$·DMBA | 1,20 | 1 h 100°C, 3 h 135°C, 16 h 180°C |
| 2,0 | 1,0 % $BCl_3$·DMBA | 1,90 | 1 h 100°C, 3 h 130°C, 16 h 200°C |
| 2,0 | 1,0 % 1,2-DMI | 4,40 | 2 h 100°C, 2 h 150°C, 16 h 200°C |
| 3,0 | 1,5 % $BCl_3$·DMBA | 4,44 | 30 min 135°C, 16 h 200°C |

[1] Chemische Bezeichnung siehe Tabelle 10

EP 0 129 787 B1

Tabelle 5       Einfluß der Normstab-Herstellungsbedingungen auf die Formstoffeigenschaften von vernetzten EP/IC-Harzen (Ansatzmolverhältnis EP:IC $\geq$ 1)

| EP/IC-Harz | | | Formstoffeigenschaften | | |
|---|---|---|---|---|---|
| Bezeich-nung[1] | Molverhältnis EP:IC | Normstab-Herstellungsbedingungen[2] | BF $N/mm^2$ | SZ $Nmm/mm^2$ | $T_M$ °C |
| A | 1,0 | KGT: 1 h 100°C, 3 h 130°C, 16 h 200°C | 105 | 9,5 | 205 |
| A | 1,0 | NSG (3 bar): 10 min 145°C, 16 h 200°C | 122 | 11,5 | 197 |
| B | 2,0 | KGT: 1 h 100°C, 3 h 130°C, 16 h 200°C | 116 | 10,5 | 180 |
| B | 2,0 | NSG (3 bar): 10 min 145°C, 16 h 180°C | 129 | 12 | 171 |
| C | 3,0 | KGT: 1 h 100°C, 3 h 130°C, 16 h 200°C | 123 | 11,5 | 169 |
| C | 3,0 | NSG (3 bar): 10 min 145°C, 16 h 180°C | 137 | 13 | 161 |

[1] Chemische Bezeichnung und Zusammensetzung siehe Tabellen 10 und 11

[2] KGT: Konventionelle Gießtechnik, NSG: Niederdruckschnellgießtechnik

Tabelle 6 Vergleich mechanisch-thermischer Eigenschaftswerte von säureanhydridgehärteten EP-Harzformstoffen mit OX/ICR-Formstoffen an Normstabprüfkörpern

| EP/SA-Harze[1] bzw. EP/IC-Harze[1] | Härtungsbedingungen | | | | Formstoffeigenschaften[2] | | |
|---|---|---|---|---|---|---|---|
| | Gießform | | Umluftofen | | BF $N/mm^2$ | SZ $Nmm/mm^2$ | TM °C |
| EP/SA-Harz I | 10 min | 150°C/3 bar | 16 h | 160°C | 116 | 11 | 117 |
| EP/SA-Harz II | 15 min | 150°C/3 bar | 16 h | 160°C | 112 | 10,5 | 110 |
| EP/SA-Harz III | 10 min | 150°C/3 bar | 16 h | 180°C | 125 | 10 | 130 |
| EP/IC-Harz A | 10 min | 145°C/3 bar | 16 h | 200°C | 122 | 11,5 | 197 |
| EP/IC-Harz B | 10 min | 145°C/3 bar | 16 h | 180°C | 129 | 12 | 171 |
| EP/IC-Harz C | 10 min | 145°C/3 bar | 16 h | 180°C | 137 | 13 | 161 |
| EP-IC-Harz D | 7 min | 145°C/3 bar | 16 h | 180°C | 127 | 12 | 170. |
| EP-IC-Harz E | 7 min | 145°C/3 bar | 16 h | 200°C | 116 | 11 | 214. |
| EP/IC-Harz H | 15 min | 140°C/3 bar | 16 h | 180°C | 140 | 20 | 155. |
| EP/IC-Harz I | 15 min | 150°C/3 bar | 16 h | 180°C | 130 | 15 | 160. |

[1] Chemische Bezeichnung und Zusammensetzung siehe Tabellen 10, 11 und 12

[2] BF = Biegefestigkeit, SZ = Schlagzähigkeit, $T_M$ = Wärmeformbeständigkeit nach Martens

EP 0 129 787 B1

Tabelle 7     Brennverhalten von quarzmehlgefüllten OX/ICR-Formstoffen nach VDE 0304 Teil 3

| Molverhältnis EP:IC | Brennverhalten Stufe | |
|---|---|---|
| 2:1 (B) | IIa | wieder verlöschend, |
| 1:1 (A) | IIa | Flammenausbreitung $0 < \overline{s} \leq 10$ (mm) |

EP/IC-Harze A und B[1]

Vernetzungsbedingungen: 10 min 145°C, 16 h 200°C (A)

10 min 145°C, 16 h 180°C (B)

[1] Chemische Bezeichnung und Zusammensetzung siehe Tabellen 10 und 11

EP 0 129 787 B1

Tabelle 8 Wasseraufnahme von quarzmehlgefüllten OX/ICR-Formstoffen

| Molverhältnis EP:IC | Wasseraufnahme[*] % |
|---|---|
| 2:1 (B) | 0,22 |
| 1:1 (A) | 0,37 |
| 1:2[2)] | 0,58 |

EP/IC-Harze A und B[1)]

Vernetzungsbedingungen: 10 min 145°C, 16 h 200°C (A)

10 min 145°C, 16 h 180°C (B)

[*] Sättigungswert bei 23°C

[1)]Chemische Bezeichnung und Zusammensetzung siehe Tabellen 10 und 11

[2)]Vernetzungsbedingungen: 3 h 130°C, 16 h 200°C

EP 0 129 787 B1

Tabelle 9      Vergleich der Umbruchwerte von 6 kV-Stützisolatoren, hergestellt aus OX/ICR-Formstoffen bzw. säureanhydridgehärteten Epoxidharzformstoffen

| Vorbehandlung | Prüftemperatur °C | Umbruchwerte in kN | |
|---|---|---|---|
| | | OX/ICR-Formstoff[1] | EP-Harzformstoff[2] |
| ohne Temperung | 100 | $17 \pm 4$ | $8 \pm 3$ |
| | 155 | $11 \pm 2$ | $2 \pm 0,5$ |
| 24 Stunden bei 160°C | 100 | $16 \pm 2$ | $7 \pm 2$ |
| | 155 | $11 \pm 2$ | $3 \pm 1$ |
| 24 Stunden bei 200°C | 100 | $18 \pm 1$ | $8 \pm 2$ |
| | 155 | $12 \pm 2$ | – |
| 4 Wochen bei 160°C | 100 | $12 \pm 2$ | – |
| | 155 | $15 \pm 2$ | – |

[1] EP/IC-Harz A (siehe Tabellen 6 und 11)

[2] EP/SA-Harz II (siehe Tabellen 6 und 12)

EP 0 129 787 B1

Tabelle 10      EP/IC-Harzkomponenten, Härtungskatalysatoren, Füllstoffe

| P o l y e p o x i d | Kurzbezeichnung | Epoxidwert<br>mol/100 g | Viskosität<br>mPa·s |
|---|---|---|---|
| Hexahydrophthalsäurediglycidylester | HHGE | 0,64 – 0,68 | 300 – 600 (25°C) |
| Bisphenol-A-diglycidylether | BAGE | 0,56 – 0,58 | 4000 – 6000 (25°C) |
| Isomerer Bisphenol-F-diglycidylether | BFGE | 0,60 – 0,62 | 5000 – 7000 (25°C) |
| Novolak-Epoxidharz | NOEP | 0,56 – 0,58 | 1100 – 1700 (52°C) |
| Polyoxypropylenglykoldiglycidylether | PPGE | 0,30 – 0,32 | 30 – 60 (25°C) |
| Hydantoin-Epoxidharz | HYEP | 0,68 – 0,72 | 1400 – 1500 (25°C) |

| P o l y i s o c y a n a t | Kurzbezeichnung | Isocyanatwert<br>mol/100 g | Viskosität<br>mPa·s |
|---|---|---|---|
| Isomeres Diphenylmethandiisocyanat | MDI | 0,78 – 0,80 | 15 (25°C) |
| Carbodiimid-Polyisocyanat | CDIC | 0,67 – 0,69 | 40 (25°C) |
| Polyolmodifiziertes Diisocyanat | POIC | 0,59 – 0,61 | 140 (25°C) |

| D i c a r b o n s ä u r e a n h y d r i d | Kurzbezeichnung | | Bemerkung |
|---|---|---|---|
| Hexahydrophthalsäureanhydrid | HHPSA | | – |
| Methyltetrahydrophthalsäureanhydrid | MTHPSA | | – |
| Methylhexahydrophthalsäureanhydrd | MHPSA | | – |

EP 0 129 787 B1

Tabelle 10 (Fortsetzung)

| H ä r t u n g s k a t a l y s a t o r | Kurzbezeichnung | Bemerkung |
|---|---|---|
| Bortrichlorid·Dimethylbenzylamin-Addukt | $BCl_3$·DMBA | − |
| Bortrichlorid·Dimethyloctylamin-Addukt | $BCl_3$·DMOA | − |
| Bortrifluorid·Dimethylbenzylamin-Addukt | $BF_3$·DMBA | − |
| Bortrifluorid·1-Benzyl-2-phenylimidazol-Addukt | $BF_3$·1B2PI | − |
| Dimethylbenzylamin | DMBA | − |
| Isomeres Bis(dimethylamino)-diphenylmethan | T-Base | − |
| 1,2-Dimethylimidazol | 1,2-DMI | gereinigt |
| 1-Cyanoethyl-2-phenylimidazol | 1CE2PI | " |
| 1-Benzyl-2-phenylimidazol | 1B2PI | " |
| 1-Methylimidazol | 1MI | " |

| F ü l l s t o f f | Kurzbezeichnung | Bemerkung |
|---|---|---|
| Quarzmehl | QM I | 6400 M/cm$^2$ |
| Quarzmehl | QM II | 16900 M/cm$^2$ |

EP 0 129 787 B1

Tabelle 11   Zusammensetzung der EP/IC-Harze

| EP/IC-Harz | Poly-epoxid | Polyiso-cyanat | EP : IC mol/mol | Härtungs-katalysator[1] | Füllstoff |
|---|---|---|---|---|---|
| A | BAGE | MDI | 1,0 | 2,0 % $BCl_3 \cdot DMBA$ | 66 % QM I |
| B | BAGE | MDI | 2,0 | 2,0 % $BCl_3 \cdot DMBA$ | 66 % QM I |
| C | BAGE | MDI | 3,0 | 2,0 % $BCl_3 \cdot DMBA$ | 66 % QM I |
| D | HHGE | MDI | 1,0 | 2,0 % $BCl_3 \cdot DMBA$ | 66 % QM I |
| E | NOEP | MDI | 2,0 | 2,0 % $BCl_3 \cdot DMBA$ | 66 % QM I |
| H | BAGE | POIC, MDI[3] | 1,0 | 1,0 % 1CE2PI | 66 % QM II |
| I | BAGE | MDI | 2,0 | 1,5 % $BF_3 \cdot 1B2PI$ | 66 % QM I |

[1] Katalysatorkonzentration bezogen auf Harzmatrix

[2] Molverhältnis Isocyanatgruppen POIC:MDI = 2:1

[3] Molverhältnis Isocyanatgruppen POIC:MDI = 3:1

EP 0 129 787 B1

Tabelle 12    Zusammensetzung der EP/SA-Harze

| EP/SA-Harz | Poly-epoxid | Dicarbonsäure-anhydrid | EP : SA mol/mol | Härtungs-katalysator[1] | Füllstoff |
|---|---|---|---|---|---|
| I | BAGE | HHPSA | 1 : 0,9 | 1,0 % DMBA | 66 % QM I |
| II | HHGE | MHPSA | 1 : 1 | 2,0 % $BCl_3 \cdot DMBA$ | 66 % QM I |
| III | NOEP | MTHPSA | 1 : 0,9 | 2,0 % $BCl_3 \cdot DMBA$ | 66 % QM I |

[1] Katalysatorkonzentration bezogen auf Polyepoxid

EP 0 129 787 B1

EP 0 129 787 B1

## Ansprüche

1. Verfahren zur Herstellung von Formstoffen für Isolierbauteile aus schnellhärtbaren, spritzgußanalog verarbeitbaren Reaktionsharzen, indem flüssige Gemische mit einer Viskosität bis zu 7000 mPa.s bei 25°C aus im wesentlichen oxazolidinonfreien Polyepoxiden und aus Polyisocyanaten (EP/IC-Harze) in einem Ansatzmolverhältnis der Epoxid- und Isocyanatgruppen von 1 bis 5 mittels tert. Amine oder Imidazole als Härtungskatalysatoren bei Geliertemperaturen von > 130 bis 150°C unter einem Druck zwischen 1 und 10 bar vernetzt und bei Temperaturen von 150 bis 200°C nachgehärtet werden unter Bildung von Oxazolidinon- und Isocyanuratringe enthaltenden Reaktionsharzformstoffen (OX/ICR-Formstoffe), wobei die Reaktionsbedingungen derart gewählt werden, daß mehr als 90 % der Epoxid- und Isocyanatgruppen umgesetzt sind und daß das Molverhältnis der Oxazolidinon- und Isocyanuratringe (OX:ICR) im Formstoff über 1 liegt.

2. Verfahren zur Herstellung von Formstoffen nach Anspruch 1, **dadurch gekennzeichnet,** daß latente Härtungskatalysatoren verwendet werden.

3. Verfahren zur Herstellung von Formstoffen nach Anspruch 2, **dadurch gekennzeichnet,** daß als latente Härtungskatalysatoren Additionskomplexe von Bortrihalogeniden mit tert. Aminen und Imidazolen verwendet werden.

4. Verfahren zur Herstellung von Formstoffen nach Anspruch 2, **dadurch gekennzeichnet,** daß als latente Härtungskatalysatoren mit Elektronenakzeptoren, insbesondere 7,7,8,8-Tetracyanochinodimethan, desaktivierte tert. Amine und Imidazole verwendet werden.

5. Verfahren zur Herstellung von Formstoffen nach Anspruch 2, **dadurch gekennzeichnet,** daß als latente Härtungskatalysatoren Oniumsalze von tert. Aminen und Imidazolen, insbesondere Benzyltrimethylammoniumchlorid und 1,2-Dimethylimidazoliumtetraphenylborat, verwendet werden.

6. Verfahren zur Herstellung von Formstoffen nach einem der Ansprüche 1 bis 5, **dadurch gekennzeichnet,** daß der Gehalt des Härtungskatalysators in den EP/IC-Harzen 0,01 bis 5 Gew.-%, vorzugsweise 0,25 bis 2,5-Gew.-%, beträgt.

7. Verfahren zur Herstellung von Formstoffen nach einem oder mehreren dar Ansprüche 1 bis 6, **dadurch gekennzeichnet,** daß die EP/IC-Harze mineralische und/oder faserförmige Füllstoffe sowie gegebenenfalls andere technisch übliche Zusatzstoffe enthalten.

8. Verfahren zur Herstellung von Formstoffen nach Anspruch 7, **dadurch gekennzeichnet,** daß als Füllstoff Quarzmehl, Quarzgut, Aluminiumoxid oder Dolomit verwendet wird.

## Claims

1. A process for the production of moulded materials, for insulating components, made of fast-hardening reaction resins, which can be processed in the manner of injection moulding, in which liquid mixtures, with a viscosity of up to 7000 mPa.s at 25°C, of substantially oxazolidinone-free polyepoxides and of polyisocyanates (EP/IC resins) are crosslinked in a composition mole ratio of epoxide and isocyanate groups of 1 to 5 by means of tertiary amines or imidazoles as hardening catalysts at gelling temperatures of >130 to 150°C at a pressure between 1 and 10 bar and are post-hardened at temperatures of 150 to 200°C, forming reaction resin moulded materials (OX/ICR moulded materials) containing oxazolidinone and isocyanurate rings, the reaction conditions being selected so that more than 90% of the epoxide and isocyanate groups are reacted and in that the mole ratio of the oxazolidinone and isocyanurate rings (OX:ICR) in the moulded material is greater than 1.

2. Process for the production of moulded materials according to claim 1, characterised in that latent

21

hardening catalysts are used.

3. Process for the production of moulded materials according to claim 2, characterised in that adducts of boron trihalides with tertiary amines and imidazoles are used as latent hardening catalysts.

4. Process for the production of moulded materials according to claim 2, characterised in that tertiary amines and imidazoles deactivated with electron acceptors, in particular 7,7,8,8-tetracyanoquinodimethane, are used as latent hardening catalysts.

5. Process for the production of moulded materials according to claim 2, characterised in that onium salts of tertiary amines and imidazoles, in particular benzyltrimethylammoniumchloride and 1,2-dimethylimidazoliumtetraphenylborate are used as latent hardening catalysts.

6. Process for the production of moulded materials according to one of claims 1 to 5, characterised in that the hardening catalyst content in the EP/IC resins is 0.01 to 5% by weight, preferably 0.25 to 2.5% by weight.

7. Process for the production of moulded materials according to one or more of claims 1 to 6, characterised in that the EP/IC resins contain mineral and/or fibrous fillers and if necessary other technologically conventional additives.

8. Process for the production of moulded materials according to claim 7, characterised in that quartz powder, fused silica, aluminium oxide or dolomite are used as the filler.

**Revendications**

1. Procédé de fabrication de matières moulées pour des composants isolants,en résines composites susceptibles de durcir rapidement et transformables d'une manière analogue au moulage par injection, qui consiste à réticuler des mélanges ayant une viscosité allant jusqu'à 7000 mPa.s à 25°C et constitués de polyépoxydes, sensiblement exempts d'oxazolidinone, et de polyisocyanates (résines EP/IC) en un rapport molaire de mélange des groupes époxyde et des groupes isooyanate de 1 à 5, au moyen d'amines tertiaires ou d'imidazoles servant de catalyseur de durcissement, à des températures de gélification allant d'une température supérieure à 130°C à 150°C, sous une pression comprise entre 1 et 10 bar et à effectuer un traitement ultérieur de durcissement à des températures de 150 à 200°C, avec formation de matières moulées en résine composite contenant des cycles oxazolidinone et isocyanurate (matières moulées OX/ICR), les conditions de réaction étant choisies de façon que plus de 90 % des groupes époxyde et isocyanate réagissent et que le rapport molaire des cycles oxazolidinone et des cycles isocyanurate (OX:ICR) dans la matière moulée soit supérieur à 1.

2. Procédé de fabrication de matières moulées suivant la revendication 1, caractérisé en ce qu'il consiste à utiliser des catalyseurs latents de durcissement.

3. Procédé de fabrication de matière moulées suivantla revendication 2, caractérisé en ce qu'il consiste à utiliser comme catalyseurs latents de durcissement des complexes d'addition de trihalogénures de bore, avec des amines tertiaires et avec des imidazoles.

4. Procédé de fabrication de matière moulées suivant la revendication 2, caractérisé en ce qu'il consiste à utiliser comme catalyseurs latents de durcissement, ayant des accepteurs d'électrons, notamment le 7,7,8,8-tétracyanoquinodiméthane, une amine tertiaire désactivée et un imidazole.

5. Procédé de fabrication de matière moulées suivant la revendication 2, caractérisé en ce qu'il consiste à utiliser comme catalyseurs latents de durcissement, des sels d'onium d'amines tertiaires et d'imidazoles, notamment le chlorure de benzyltriméthylammonium et le tétraphénylborate de 1,2-diméthylimidazolium.

6. Procédé de fabrication de matière moulées suivant l'une des revendications 2 à 5, caractérisé en ce que la teneur en catalyseurs de durcissement des résines EP/IC est comprise entre 0,01 et 5 % en poids et, de préférence, entre 0,25 et 2,5 % en poids.

7. Procédé de fabrication de matières moulées suivant l'une ou plusieurs des revendications 1 à 6, caractérisé en ce que les résines EP/IC contiennent des charges minérales et/ou fibreuses ainsi que, le cas échéant, d'autres additifs habituels dans la technique.

8. Procédé de fabrication de matière moulées suivant la revendication 7, caractérisé en ce qu'il consiste à utiliser comme charge de la poudre de quartz, de la silice vitreuse, de l'oxyde d'aluminium ou de la dolomite.